# EUROPEAN PATENT SPECIFICATION

(11) **EP 0 310 717 B1**
(45) Date of publication and mention of the grant of the patent: **09.06.1993**
(21) Application number: 87308844.7
(22) Date of filing: 06.10.1987
(51) Int. Cl.: H01M 2/10, H01M 10/46, H01M 2/20, H02J 7/00

(54) **Battery pack**
Batteriesatz
Ensemble de batteries

(43) Date of publication of application: 12.04.1989
(73) Proprietor: Black & Decker Inc., Newark Delaware 19711 (US)
(72) Inventor: Gierke, Martin P., Baltimore Maryland 21236 (US); Sell, Michael R., Bel Air Maryland 21014 (US); Bailey, R. Roby, Forest Hill Maryland 21050 (US); Schiazza, Alfred, III, Easton Maryland 21601 (US); Walter, Richard T., Baldwin Maryland 21013 (US)
(74) Representative: Lucas, Brian Ronald

(56) References cited:
- EP-A- 0 203 847
- DE-A- 2 555 601
- DE-A- 3 432 294
- DE-A- 3 540 853
- GB-A- 1 075 857
- GB-A- 1 108 357
- GB-A- 2 028 022
- US-A- 2 991 376
- US-A- 3 274 476
- US-A- 3 453 578
- US-A- 3 710 306
- US-A- 3 912 998
- US-A- 3 919 615
- US-A- 3 963 972

## Description

This invention relates to a battery pack for portable tools and appliances.

In recent years, low-voltage, direct current, for example, 12 VDC hand-held appliances and tools have proliferated for use in the car and around the home. Some appliances, such as hand-held car vacuum cleaners and car polishers, are intended for operation using power supplied from the car battery. These appliances, which are relatively low current devices, for example, 2 - 6 amps, typically employ a plug connector compatible with the socket of a conventional, dash-mounted automotive cigar lighter. The necessity for use of these appliances in close proximity to a vehicle having a cigar lighter socket has restricted the utilization of the same appliances around the home.

Many low voltage, hand-held tools used around the home require relatively high current levels, for example, 8 - 20 amps. These high current tools include hedge trimmers and grass trimmers. Conventionally, such tools are powered by rechargeable batteries contained within the tool. In order to provide the tool with an acceptable operating time it is necessary to use several rechargeable batteries. However, these add to the weight of the tool and make is cumbersome to use.

DE-A-34 32 294 discloses a battery pack which can be carried by a person and which has a socket to which a power cord of a tool or appliance may be detachably connected. The socket receives a special plug which is connected to a tool.

According to one aspect the present invention is characterized in that the socket can accommodate, one at a time, a conventional cigar lighter socket-compatible plug and a plug which is capable of carrying higher currents but is incompatible with a conventional cigar lighter socket, and in that it includes means to inhibit actuation of a conventional cigar lighter plug on insertion therein.

This has the advantage that the power pack can be used to power both low current devices provided with conventional cigar lighter socket-compatible plugs and high current devices provided with a special high current plug.

Preferably, the socket has a contact which projects internally of said socket and has an abutment surface which provides an abutment contact for said conventional cigar lighter socket-compatible plug and a side(s) for providing a wiping contact for said plug which is capable of carrying higher currents.

According to another aspect, the present invention is characterized in that said socket is provided with a first abutment surface and a second abutment surface for abutment with contact members of a conventional cigar lighter socket-compatible plug, said first abutment surface forms an end of a first wiping member for wiping contact with a first wiping contact of a plug which is incompatible with a conventional cigar lighter socket and which is capable of carrying higher currents, and said socket is further associated with a second wiping member for wiping contact with a second wiping contact of said plug which is capable of carrying higher currents, and in that it includes means to inhibit actuation of a conventional cigar lighter plug on insertion therein.

The present invention also includes such a battery pack and a plug therefor, which plug is capable of carrying higher currents, said plug comprising a first wiping member which extends into said socket and surrounds and makes wiping contact with said first wiping member of said socket, said plug further comprising a second wiping contact which makes wiping contact with the second wiping member of said socket.

The battery pack is provided with means to inhibit actuation of a conventional cigar lighter on insertion in the socket. Such means may comprise, for example, a boss to engage the face of the cigar lighter plug and prevent its coming into contact with an electrode in the socket.

Advantageously, the battery pack includes one or more straps to enable the battery pack to be strapped to the waist of a user and/or supported by his or her shoulder.

The battery pack may contain a plurality of rechargeable NiCd cells. However, it preferably contains one or more lead-acid type batteries.

The battery pack may also contain or, more preferably, be associated with, recharging equipment, for example, a transformer, a rectifying circuit and, optionally, a voltage control circuit.

Preferably the battery pack comprises a charging unit comprising a transformer, a rectifier, a voltage regulator and means for engaging contacts in said battery pack when mounted on said charging unit for conveying electricity from said charging unit to said battery pack.

Conventionally, battery powered tools and appliances are cordless. In contrast tools or appliances for use with battery packs in accordance with the present invention will have a cord. By making such a cord self-retractable then the tool or appliance can be freely manipulated by the user without undue hindrance from the cord. A normally coiled cord is quite suitable for this purpose and, accordingly, the present invention provides a battery pack in accordance with the invention in combination with a tool or appliance which is connected to said battery pack by a self-retractable cord.

The self-retractable cord may be provided with a plug which can be inserted in the socket but which is provided with means for preventing actuation or insertion of the plug in a conventional cigar lighter socket.

For a better understanding of the present invention reference will now be made, by way of example, to the accompanying drawings, in which:-
Fig. 1 is a schematic representation showing a battery pack in accordance with the invention, various portable tools and appliances connected to the battery pack and the battery pack being recharged;
Figs. 2 and 3 are perspective and side views respectively of the battery pack;
Fig. 4 is an illustration of the battery pack shown in Figs. 2 and 3 being worn by a user and connected to a high current power tool;
Fig. 5 is a schematic cross-section of a socket forming part of the battery pack together with a conventional cigar lighter-compatible plug (shown in chain lines) and a plug for carrying higher currents;
Figs. 6 and 7 are schematic top and end views showing the battery pack in a recharging base;
Fig. 8 is a circuit diagram of the components in the recharging base;
Fig. 9 is a circuit diagram of the components in the battery pack;
Figs. 10 and 11 show two different types of cigar lighter being inserted in the socket; and
Fig. 12 shows a cigar lighter socket with a cigar lighter in chain lines and the plug for carrying higher currents shown in Figure 5 inserted in the cigar lighter socket (in chain lines).

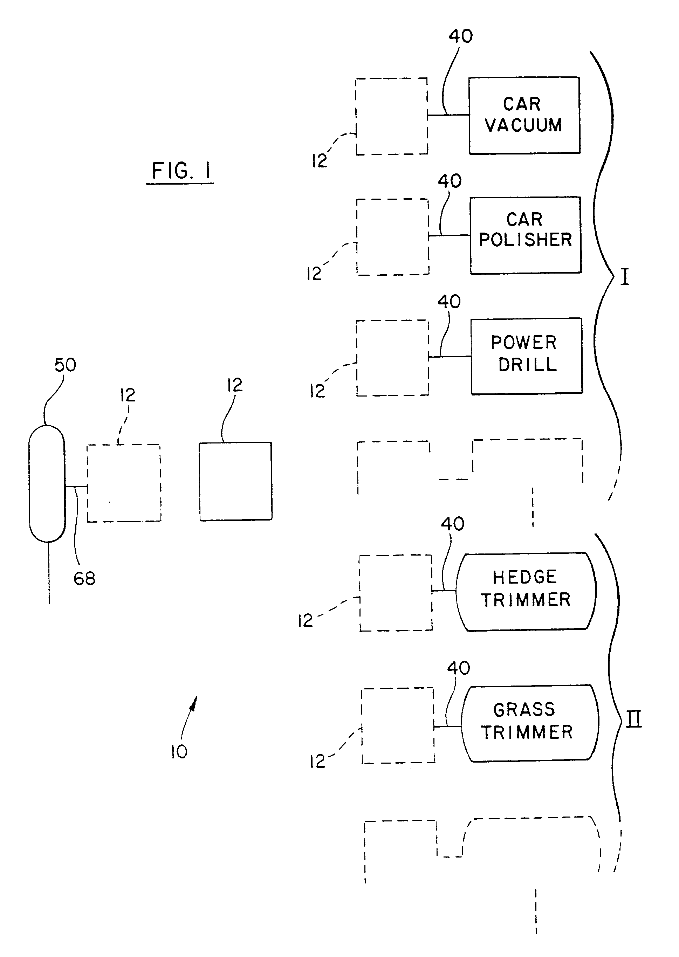

Referring to Figure 1 there is shown a battery pack which is generally identified by reference numeral 12. As shown, the battery pack 12 can be connected to various low current tools and appliances, for example, a car vacuum, a car polisher, and a low power drill. These tools and appliances typically operate at 12 VDC with a current of 2-6 amps.

The battery pack 12 can also be connected to various high current tools and appliances, for example, a hedge trimmer and a grass trimmer. These tools typically operate at 12 VDC with a current of 8-20 amps.

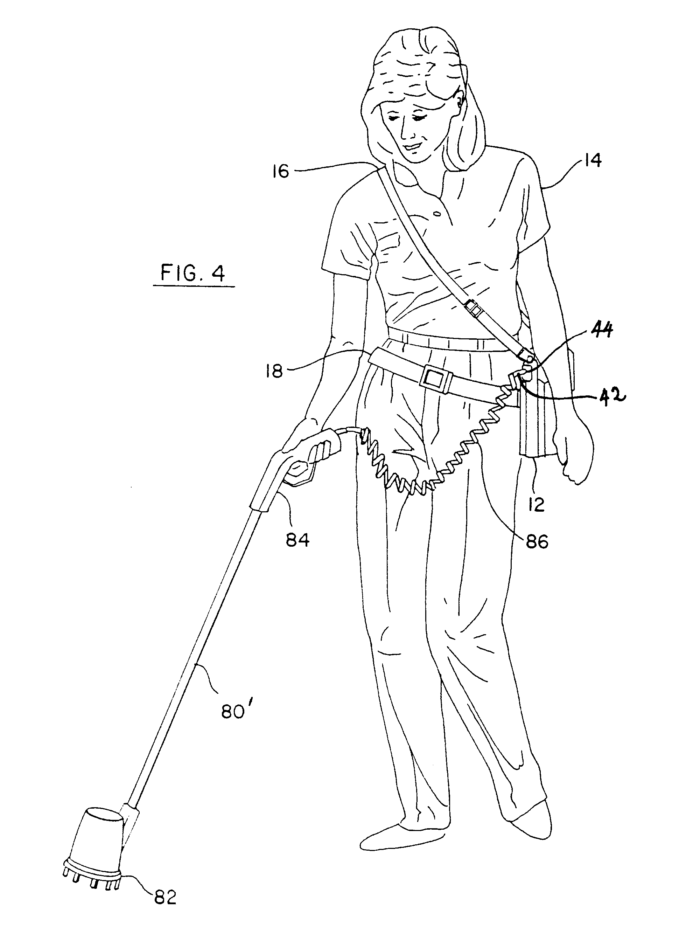

As shown in Figure 4, the battery pack 12 can be carried by an operator 14 by a combination of shoulder strap 16 and waist strap 18.

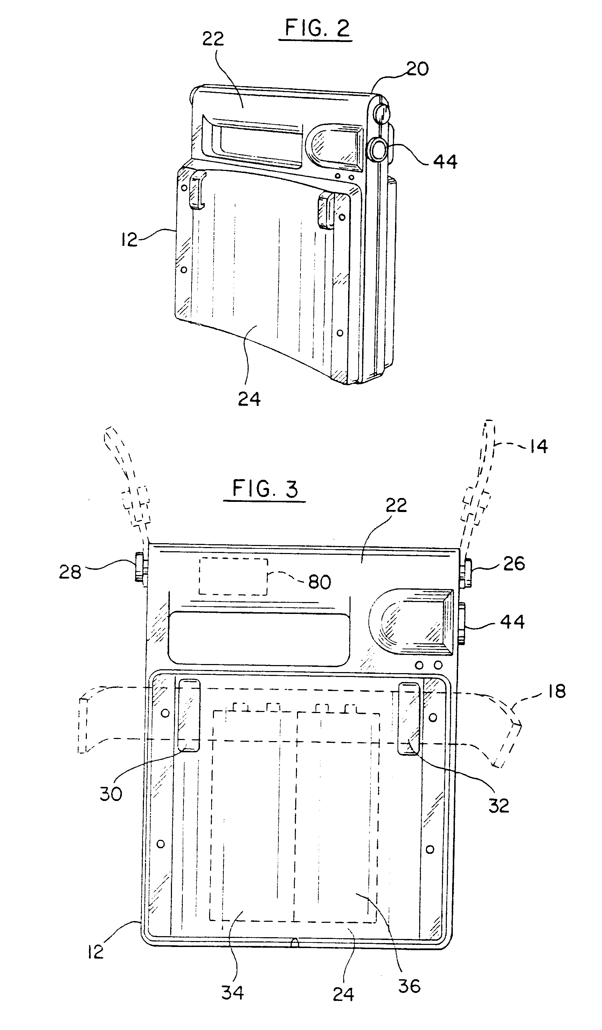

As best seen in Figures 2 and 3, battery pack 12 comprises a housing 20 which is formed from an impact resistant plastic in a two-piece "clamshell" construction. Housing 20 includes an integrally formed hand grip portion 22 and a side 24 which is inwardly curved to conform to the rounded trunk of the operator 14. Housing 20 also includes stud members 26, 28 for attaching shoulder strap and loop members 30, 32 for receiving waist strap 18.

While battery pack 12 may be supported by operator 14 through either shoulder strap 16 or waist strap 18 alone, a more comfortable and secure attachment is provided through the use of both shoulder strap 16 and waist strap 18 simultaneously as shown in Figure 4.

With continued reference to Figure 3, battery pack 12 contains a plurality of rechargeable batteries, such as batteries 34 and 36. It is preferred that batteries 34, 36 be of the lead-acid type which exhibit superior voltage/current performance characteristics over extended temperature ranges. This extended operating range is intended to further increase the utility of the overall system.

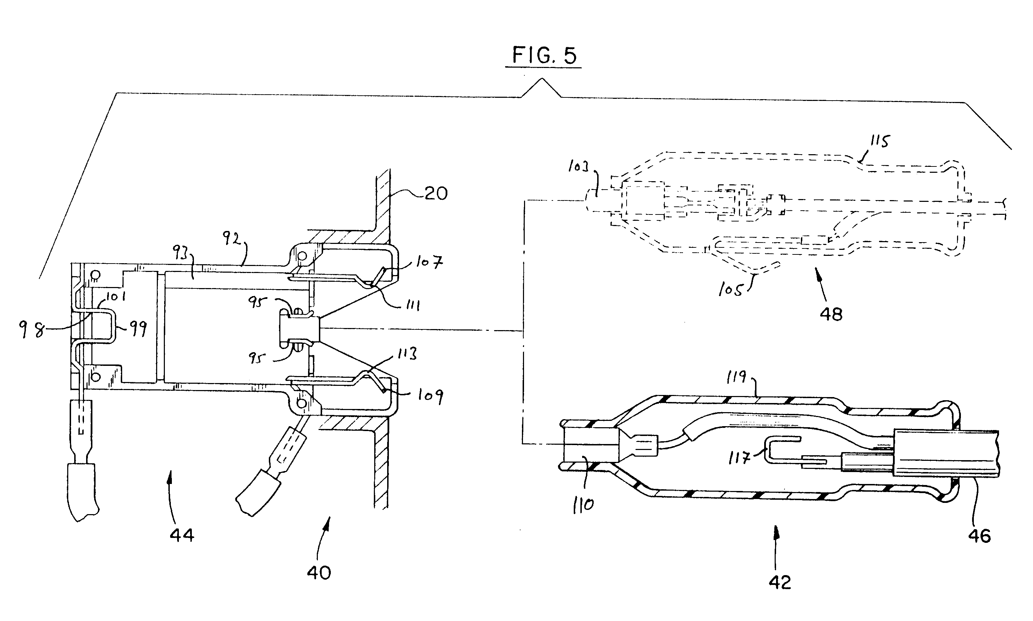

A socket 44 is mounted on the housing 20. The socket 44 has a cylindrical housing 92 which contains a cylindrical metal casing 93. One pair of ears projects generally radially outwardly from diametrically opposite sides of the cylindrical metal casing 93. The pair of ears 95a, 95b can be clearly seen in Figure 5. The socket 44 is also provided with a contact 98 which has an abutment surface 99 and a cylindrical outer surface 101.

As shown, in Figure 5, a conventional cigar lighter socket-compatible plug 48 comprises a spring loaded contact 103 and a spring wire contact 105. When the conventional cigar lighter socket-compatible plug 48 is inserted in the socket 44 the spring loaded contact 103 makes abutting contact with the abutment surface 99 and the spring wire contact 105 makes abutting contact with the cylindrical metal casing 93. The plug 48 is retained in the socket 44 by two resilient arms 107, 109 which have inwardly projecting portions 111, 113 respectively which engage sloping surface 115 of plug 48.

Whilst this arrangement is quite adequate for handling low currents, for example, 2-6 amps, it is not suitable for handling high currents, for example, 8-20 amps.

Plug 42 is capable of handling higher currents and includes a first wiping member in the form of a cylindrical sleeve 110 of brass and a second wiping member in the form of U-shape member 117 which has portions which project radially outwardly from diametrically opposite sides of the resilient plastic casing 119 of the plug 42. When the plug 42 is inserted in the socket 44 the cylindrical sleeve 110, which is an interference fit with the cylindrical outer surface 101 of the contact 98, rubs along the cylindrical outer surface 101 thereby wiping away at least some of any oxide or dirt layer present and making a good electrical contact between a substantial portion of the surface area of the inside of the cylindrical sleeve 110 and the cylindrical outer surface 101 of the contact 98.

Similarly, the portions of the U-shape member 117 which project to either side of the resilient plastic casing 119 of the plug 42 rub along the ears thereby cleaning at least part of the surface of the ears and making good electrical contact over a substantial portion of the contact area. The forward end of the resilient plastic casing 119 projects beyond the forward extremity of the cylindrical sleeve 110 thereby preventing the cylindrical sleeve 110 coming into contact with the end electrode of a conventional cigar lighter socket as described hereinafter. Further details of the plug 42, socket 44 and cigar lighter socket-compatible plug 48 can be found in our co-pending European Patent Application No. 87 308 845.4 of even date.

Because of the intended compatibility with conventional low-current cigar lighter socket-compatible plugs, the socket 44 has means for preventing insertion of a conventional cigar lighter plug.

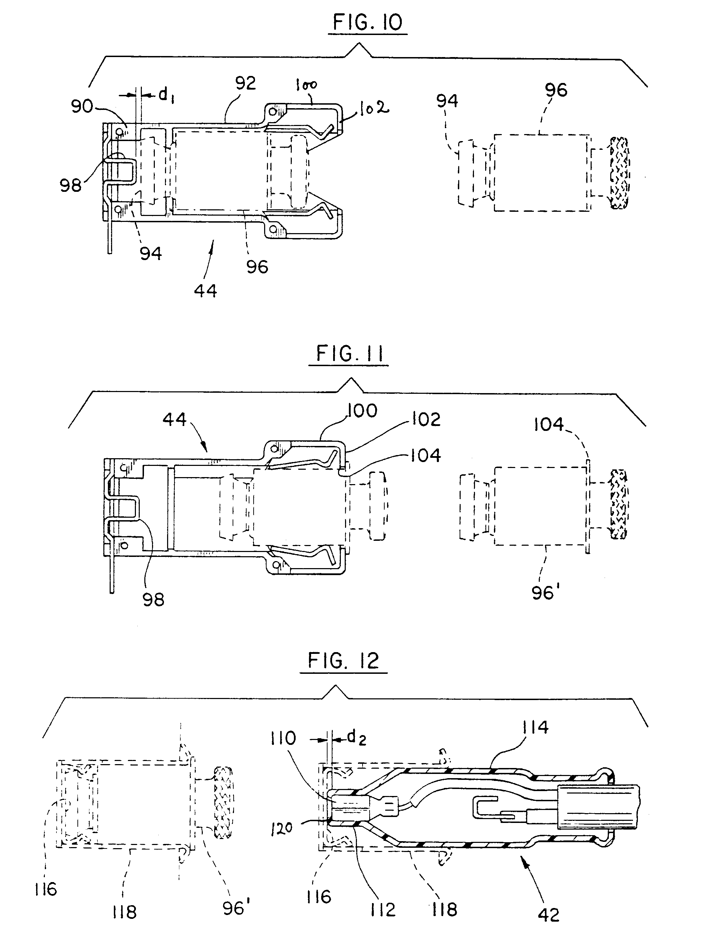

As shown schematically in Figs. 10 and 11, socket 44 includes a boss 90 integrally formed with cylindrical housing 92. Boss 90 is sized to intercept axial face 94 of cigar lighter plug 96 (shown in broken lines) and space axial face 94 from contact 98 to prevent an electrical connection. Also, housing extension 100 includes a lip portion 102 sized to intercept flange 104 of cigar lighter plug 96' (see Fig. 11). The heat generated by activation of cigar lighter plug 96 could damage the cylindrical housing 92 which, as stated previously, is made of a resilient plastics material.

The structure of plug 42 should be such that it should not be actuated on insertion in a conventional cigar lighter socket such as cigar lighter socket 118 in Figure 12. This is because the cigar lighter socket 118 might be fused at, for example, 6 amps, whilst the appliance connected to the plug 42 could require a higher current, for example 16 amps. As shown in Fig. 12, a part 120 of plug 42 projects beyond cylindrical sleeve 110 thereby preventing electrical contact between cylindrical sleeve 110 and contact face 116 of cigar lighter socket 118 (shown in broken lines).

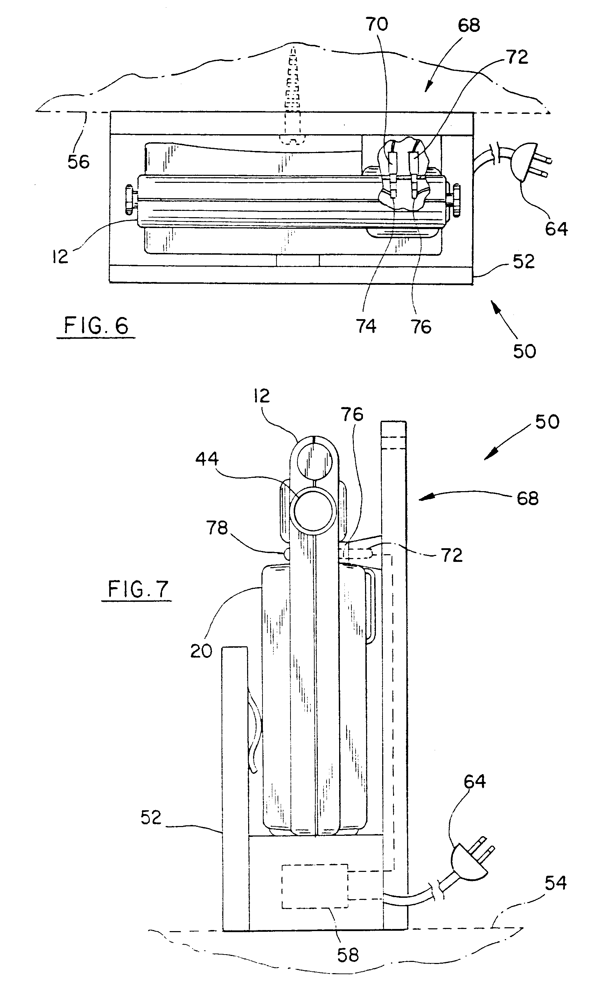

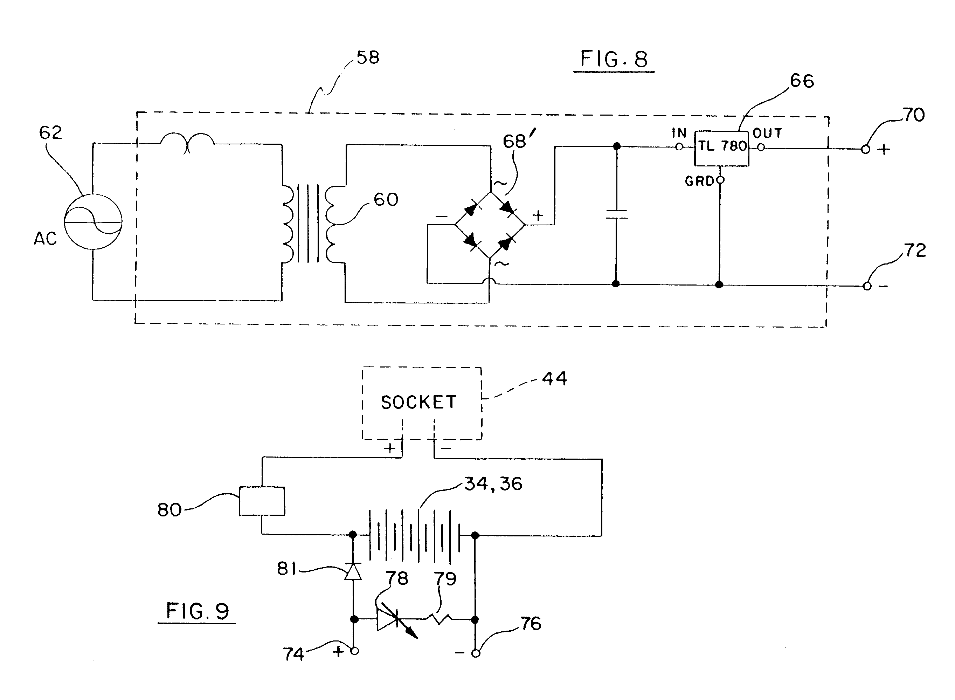

The battery pack 12 can be recharged in a charging unit designated generally by the numeral 50 (Figures 6 and 7). The charging unit 50 comprises a housing 52 which serves as a stand for receiving battery pack 12 during charging operations. Housing 52 can be optionally rested on a horizontal surface such as surface 54 as depicted in Figure 7 or can be mounted on a vertical surface such as surface 56 as depicted in Figure 6.

As shown in Figure 8, the housing 52 contains a transformer 60 the input of which is shown operationally connected to a source 62 of standard house AC power. The output of the transformer 60 is connected to a full wave rectifier 68' the output of which is smoothed and stabilised by a voltage regulator 66. The output of voltage regulator 66 is delivered to prongs 70 and 72.

When battery pack 12 is mounted on charging unit 50 prongs 70, 72 come into contact with contacts 74, 76 in battery pack 12. As shown in Figure 9, contacts 74, 76 are electrically connected across the batteries of battery pack 12. LED 78, shown schematically in Figure 9 with associated resistor 79, is disposed on the outside of housing 20 (see Figure 7) and provides a visual indication of power flow to batteries 34, 36 during charging. The LED 78 is rated at 50 milliamps and the resistor 79 at 660 ohms, 0.5 watts, 10%. Battery pack 12 also includes a circuit breaker 80 connected in series between batteries 34, 36 and socket 44 to provide protection against excessively high current flow in the battery circuit. Circuit breaker 80 is rated at 20 amps.

With reference to Fig. 3, circuit breaker 80 can be positioned conveniently in hand grip portion 22 of housing 20. Diode 81 in the Figure 9 circuit schematic is a type 4002, 50 volt PIV.

Each of the power tools and appliances intended for operation with the battery pack includes a power cord and a cord control means for biasing the power cord away from the ground and away from the operational end of the respective power tool or appliance. With reference to Figure 4, power tool 80' which is a weed trimmer having an operational end (trimming head) 82 and a handle 84 includes a power cord 86 which is spirally coiled to be self-retractable along its length. One end of the power cord 86 is permanently connected to the power tool 80 at handle 84 while a plug 42 is attached to the other end of power cord 86 and, in turn, is inserted into socket 44 in battery pack 12. The self-retractable power cord 86 prevents entanglement with the user's feet and arms while permitting a full range of motion of power tool 80'. The self-retractable power cord 86 also inhibits damage to the power cord 86 caused by inadvertent engaging with operational end 82 of power tool 80'.

## Claims

1. A battery pack which can be carried by a person and has a socket (44) to which a power cord (86) of a tool or appliance may be detachably connected, characterized in that said socket (44) can accommodate, one at a time, a conventional cigar lighter socket-compatible plug (48) and a plug (42) which is capable of carrying higher currents but is incompatible with a conventional cigar lighter socket, and in that it includes means (90) to inhibit actuation of a conventional cigar lighter plug (96) on insertion therein.

2. A battery pack according to Claim 1, characterized in that said socket (44) has a contact (98) which projects internally of said socket (44) and has an abutment surface (99) which provides an abutment contact for said conventional cigar lighter socket-compatible plug (48) and a side(s) for providing a wiping contact for said plug (42) which is capable of carrying higher currents.

3. A battery pack which can be carried by a person and has a socket (44) to which a power cord (86) of a tool or appliance may be detachably connected, characterized in that said socket (44) is provided with a first abutment surface (99) and a second abutment surface (93) for abutment with contact members (103, 105) of a conventional cigar lighter socket-compatible plug (48), said first abutment surface (99) forms an end of a first wiping member (98) for wiping contact with a first wiping contact (110) of a plug (42) which is incompatible with a conventional cigar lighter socket and which is capable of carrying higher currents, and said socket (44) is further associated with a second wiping member (95) for wiping contact with a second wiping contact (117) of said plug (42) which is capable of carrying higher currents, and in that it includes means (90) to inhibit actuation of a conventional cigar lighter plug (96) on insertion therein.

4. A battery pack according to Claim 3 and a plug (42) therefor, which is capable of carrying higher currents, said plug (42) comprising a first wiping member (110) which extends into said socket (44) and surrounds and makes wiping contact with said first wiping member (98) of said socket (44), said plug (42) further comprising a second wiping contact (117) which makes wiping contact with the second wiping member (95) of said socket (44).

5. A battery pack according to any preceding Claim, characterized in that it includes one or more straps (16, 18) to enable said battery pack (12) to be strapped to the waist of a user and/or supported by his or her shoulder.

6. A battery pack as claimed in any preceding Claim, including one or more lead-acid type batteries (34, 36).

7. A battery pack according to any preceding Claim, and a charging unit (50) therefor, said charging unit (50) comprising a transformer (60), a rectifier (68'), a voltage regulator (66) and means (70, 72) for engaging contacts (74, 76) in said battery pack (12) when mounted on said charging unit (50) for conveying electricity from said charging unit (50) to said battery pack (12).

8. A battery pack as claimed in any preceding Claim and a tool or appliance electrically connected thereto by a self-retractable cord (86).

9. A battery pack according to Claim 8, characterized in that said self-retractable cord is provided with a plug (42) which can be inserted into said socket (44).

## Patentansprüche

1. Batterieeinheit, die von einer Person getragen werden kann und eine Steckeraufnahme (44) hat, mit der lösbar eine Spannungsversorgungsleitung (86) eines Werkzeugs oder eines Gerätes verbunden werden kann, **dadurch gekennzeichnet**, daß die Steckeraufnahme (44) jeweils zur Zeit einen konventionellen, mit einer Zigarrenanzünder-Steckeraufnahme kompatiblen Stecker (48) und einen Stecker (42) aufnehmen kann, der höhere Ströme führen kann, jedoch mit einer konventionellen Zigarrenanzünder-Steckeraufnahme inkompatibel ist, und daß Mittel (90) vorgesehen sind, um die Aktivierung eines üblichen Zigarrenanzünder-Steckers (96) bei dessen Einführen zu verhindern.

2. Batterieeinheit nach Anspruch 1, **dadurch gekennzeichnet**, daß die Steckeraufnahme (44) einen sich von ihr nach innen erstreckenden Kontakt (98) und eine Anlagefläche (99) hat, die einen Anlagekontakt für den genannten, konventionellen, mit einer üblichen Zigarrenanzünder-Steckeraufnahme kompatiblen Stecker (48) und eine Seite (Seiten) aufweist, die einen Zungenkontakt für den Stecker (42) bilden, der höhere Ströme führen kann.

3. Batterieeinheit, die von einer Person getragen werden kann und eine Steckeraufnahme (44) aufweist, mit der eine Spannungsversorgungsleitung (86) eines Werkzeugs oder eines Geräts lösbar verbunden werden kann, **dadurch gekennzeichnet**, daß die Steckeraufnahme (44) eine erste Anlagefläche (99) und eine zweite Anlagefläche (93) zur Anlage von Kontaktelementen (103, 105) eines konventionellen, mit einer Zigarrenanzünder-Steckeraufnahme kompatiblen Steckers (48) aufweist, wobei die erste Anlagefläche (99) ein Ende eines ersten Zungenelementes (98) für eine gleitende Berührung mit einem ersten Zungenkontakt (110) eines Steckers (42) bildet, der mit einer üblichen Zigarrenanzünder-Steckeraufnahme inkompatibel und in der Lage ist, höhere Ströme zu führen, und wobei der Steckeraufnahme (44) ein zweites Zungenelement (95) für die gleitende Berührung mit einem zweiten Zungenkontakt (117) des Steckers (42), der in der Lage ist höhere Ströme zu führen, zugeordnet ist, und daß Mittel (90) vorgesehen sind, die die Aktivierung eines konventionellen Zigarrenanzünder-Steckers (96) beim Einsetzen verhindern.

4. Batterieeinheit nach Anspruch 3 und Stecker (42) für diese, der in der Lage ist höhere Ströme zu führen, wobei der Stecker (42) ein erstes Zungenelement (110), das sich in die Steckeraufnahme (44) erstreckt und das erste Zungenelement (98) des Steckers (44) umgibt und mit diesem in Gleitberührung kommt, sowie einen zweiten Zungenkontakt (117) aufweist, der in gleitende Berührung mit dem zweiten Zungenelement (95) des Steckers (44) kommt.

5. Batterieeinheit nach einem der vorhergehenden Ansprüche, **dadurch gekennzeichnet,** daß es ein oder mehrere Gurte (16, 18) aufweist, mit denen es an der Hüfte eines Benutzers befestigt und/oder von ihm oder ihr über die Schulter getragen werden kann.

6. Batterieeinheit nach einem der vorhergehenden Ansprüche, die eine oder mehrere Batterien (34, 36) des BleiakkumulatorTyps enthält.

7. Batterieeinheit nach einem der vorhergehenden Ansprüche und Ladeeinheit (50) für diese, wobei die Ladeeinheit (50) einen Transformator (60), einen Gleichrichter (68'), einen Spannungsregulierer (66) und Mittel (70, 72) für den Eingriff mit Kontakten (74, 76) in der Batterieeinheit (12), wenn diese an der Ladeeinheit (50) befestigt ist, um Elektrizität von der Ladeeinheit (50) zur Batterieeinheit (12) zu übertragen, aufweist.

8. Batterieeinheit nach einem der vorhergehenden Ansprüche und mit dieser über eine zusammenziehbare Leitung (86) elektrisch verbundenes Werkzeug oder Gerät.

9. Batterieeinheit nach Anspruch 8, **dadurch gekennzeichnt**, daß die zusammenziehbare Leitung mit einem Stecker (42) versehen ist, der in die Steckeraufnahme (44) eingeführt werden kann.

## Revendications

1. Ensemble de batteries pouvant être transporté par une personne et possédant une prise (44) à laquelle le cordon d'alimentation (86) d'un outil ou d'un appareil peut être relié de façon amovible, caractérisé en ce que ladite prise (44) peut recevoir, une seule à la fois, une fiche (48) compatible avec une prise d'allume-cigare conventionnelle ou une fiche (42) capable de transporter des courants plus élevés, mais incompatible avec une prise d'allume-cigare conventionnelle, et en ce qu'il comporte un dispositif (90) destiné à inhiber le fonctionnement d'une fiche d'allume-cigare conventionnelle (96) lorsqu'elle y est insérée.

2. Ensemble de batteries selon la revendication 1, caractérisé en ce que ladite prise (44) possède un contact (98) qui se projette vers l'intérieur de ladite prise (44) et qui possède une surface d'appui (99) qui fournit un contact de butée pour ladite fiche (48) compatible avec une prise d'allume-cigare conventionnelle ainsi qu'un (des) côté(s) destiné(s) à fournir un contact par frottement pour ladite fiche (42), capable de transporter des courants plus élevés.

3. Ensemble de batteries pouvant être transporté par une personne et possédant une prise (44) à laquelle le cordon d'alimentation (86) d'un outil ou d'un appareil peut être relié de façon amovible, caractérisé en ce que ladite prise (44) est fournie avec une première surface d'appui (99) et une seconde surface d'appui (93) destinées à l'appui des organes de contact (103, 105) d'une fiche (48) compatible avec une prise d'allumecigare conventionnelle, ladite première surface d'appui (99) constituant l'extrémité d'un premier organe de frottement (98) destiné à frotter sur le contact avec un premier contact par frottement (110) d'une fiche (42) incompatible avec une prise d'allume-cigare conventionnelle et capable de transporter des courants plus élevés, et ladite prise (44) étant également associée avec un second organe de frottement (95) destiné à frotter sur le contact avec un second contact par frottement (117) de ladite fiche (42) capable de transporter des courants plus élevés, et en ce qu'il comporte un dispositif (90) destiné à inhiber le fonctionnement d'une fiche d'allume-cigare conventionnelle (96) lorsqu'elle y est insérée.

4. Ensemble de batteries selon la revendication 3 et fiche (42), capable de transporter des courants plus élevés, ladite fiche (42) comportant un premier organe de frottement (110) qui s'étend à l'intérieur de ladite prise (44) et qui entoure et réalise un contact par frottement sur ledit premier organe de frottement (98) de ladite prise (44), ladite fiche (42) comportant également un second organe de frottement (117) qui réalise un contact par frottement avec le second organe de frottement (95) de ladite prise (44).

5. Ensemble de batteries selon l'une des revendications précédentes caractérisé en ce qu'il comprend une ou plusieurs bandes (16, 18) pour permettre audit ensemble de batteries (12) d'être fixé à l'épaule d'un utilisateur ou d'être supporté par l'épaule de celui-ci.

6. Ensemble de batteries selon l'une quelconque des revendications précédentes, comportant une ou plusieurs batteries (34, 36) du type au plomb.

7. Ensemble de batteries selon l'une quelconque des revendications précedentes, et élément chargeur (50), ledit élément chargeur (50) comportant un transformateur (60), un redresseur (68'), un régulateur de tension (66) et un dispositif (70, 72) destiné à engager des contacts (74, 76) dans ledit ensemble de batteries (12) lorsqu'il est monté sur ledit élément chargeur (50) afin de transporter l'électricité depuis ledit élément chargeur (50) vers ledit ensemble de batteries (12).

8. Ensemble de batteries selon l'une quelconque des revendications précédentes et outil ou appareil qui y est relié électriquement par un cordon auto-rétractable (86).

9. Ensemble de batteries selon la revendication 8, caractérisé en ce que ledit cordon auto-rétractable est fourni avec une fiche (42) qui peut être insérée dans ladite prise (44).
